# EUROPÄISCHE PATENTSCHRIFT

(11) **EP 2 127 967 B1**
(45) Veröffentlichungstag und Bekanntmachung des Hinweises auf die Patenterteilung: **23.11.2011**
(21) Anmeldenummer: 09100304.6
(22) Anmeldetag: 29.05.2009
(51) Int. Cl.: B60S 1/04

(54) **Scheibenwischvorrichtung sowie Kraftfahrzeug**
Windscreen wiper device and motor vehicle
Dispositif d'essuie-glace et véhicule automobile

(30) Priorität: 29.05.2008 DE 102008002081
(43) Veröffentlichungstag der Anmeldung: 02.12.2009
(73) Patentinhaber: Robert Bosch GmbH, 70442 Stuttgart (DE)
(72) Erfinder: Scheller, Lothar, 76133, Karlsruhe (DE); Metz, Ulrich, 77855, Achern (DE)

(56) Entgegenhaltungen:
- DE-A1- 3 116 821
- DE-A1- 19 809 630
- DE-A1-102006 015 220
- US-A1- 2003 052 504

## Beschreibung

### Stand der Technik

Die Erfindung betrifft eine Scheibenwischvorrichtung gemäß dem Oberbegriff des Anspruchs 1 sowie ein Kraftfahrzeug gemäß Anspruch 11.

Aus der DE 10 2006 015 220 A1 ist eine Scheibenwischvorrichtung bekannt, die ein erstes Befestigungsmittel, ein zweites Befestigungsmittel und ein drittes Befestigungsmittel aufweist, mit denen die Scheibenwischvorrichtung an der Karosserie eines Kraftfahrzeugs befestigbar ist. Zwischen dem ersten und dem zweiten Befestigungsmittel ist hierzu eine Platine angeordnet, die die wesentlichen Komponenten, wie den Antrieb und die Wischerlager mit den Wischerwellen der Scheibenwischvorrichtung trägt. Das dritte Befestigungsmittel ist außerhalb einer gedachten, durch das erste und zweite Befestigungsmittel definierten, Achse im Bereich des Antriebs der Scheibenwischvorrichtung angeordnet. Ferner weist die Scheibenwischvorrichtung Verstellmittel zum Verkippen der Platine um einen Kippwinkel um die durch das erste und das zweite Befestigungsmittel verlaufende Achse auf. Die Verstellmittel der bekannten Scheibenwischvorrichtung weisen Rastmittel zur Vorbestimmung des Kippwinkels auf. Nachteilig bei der bekannten Scheibenwischvorrichtung ist der vergleichsweise komplexe Aufbau der Verstellmittel.

### Offenbarung der Erfindung

### Technische Aufgabe

Der Erfindung liegt daher die Aufgabe zugrunde, eine Scheibenwischvorrichtung mit möglichst einfach aufgebauten Verstellmitteln vorzuschlagen. Ferner besteht die Aufgabe darin, ein Kraftfahrzeug mit einer entsprechend optimierten Scheibenwischvorrichtung vorzuschlagen.

### Technische Lösung

Diese Aufgabe wird hinsichtlich der Scheibenwischvorrichtung mit den Merkmalen des Anspruchs 1 und hinsichtlich des Kraftfahrzeugs mit den Merkmalen des Anspruchs 11 gelöst. Vorteilhafte Weiterbildungen der Erfindung sind in den Unteransprüchen angeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, den Verstellmitteln eine um eine Drehachse relativ zur Platine (Haltemittel) verdrehbare Exzenterhülse (Exzenterbuchse) zuzuordnen, wobei die Exzenterhülse sich entweder unmittelbar an der Fahrzeugkarosserie oder an einem karosseriefest anordenbaren Element abstützend angeordnet ist. Dabei ist die Exzenterhülse derart ausgebildet, dass ein Verdrehen der Exzenterhülse um die Drehachse zu einem Verkippen der Platine um einen Kippwinkel um die durch das erste und das zweite Befestigungsmittel verlaufende Achse führt. Das Vorsehen einer verdrehbaren Exzenterhülse resultiert in einem äußerst einfachen Aufbau der Verstellmittel. Im Gegensatz zum Stand der Technik kann durch das Vorsehen einer Exzenterhülse eine stufenlose Verstellmöglichkeit, also eine stufenlose Einstellung des Kippwinkels realisiert werden. Unter einem karosseriefest anordenbaren Element wird ein Element verstanden, das entweder unmittelbar mit der Fahrzeugkarosserie oder alternativ mit einem an der Fahrzeugkarosserie festgelegten Bauteil verbindbar ist. Wesentlich ist, dass die Exzenterhülse die Platine über das Element im fertig montierten Zustand an der Fahrzeugkarosserie abstützen kann.

Bevorzugt umfasst die Exzenterhülse eine gekrümmte Abstützfläche, mit der sich die Exzenterhülse entweder unmittelbar an der Fahrzeugkarosserie oder an dem karosseriefest anordenbaren Element abstützt. Dabei gleitet die Abstützfläche beim Verdrehen der Exzenterhülse um ihre Drehachse entlang eines, insbesondere bolzenförmigen, Abschnittes der Fahrzeugkarosserie oder entlang des karosseriefest anordenbaren Elementes, wodurch der Abstand der Fahrzeugkarosserie zur Drehachse der Exzenterbuchse und damit der Abstand der Platine zur Fahrzeugkarosserie, insbesondere stufenlos verändert wird. Zur Realisierung einer Exzenterhülse ist es bevorzugt, wenn die Abstützfläche um eine Achse, insbesondere mit einem konstanten Krümmungsradius, gekrümmt ist, die zur Drehachse der Exzenterhülse beabstandet ist und vorzugsweise parallel zu dieser verläuft.

In Weiterbildung der Erfindung ist mit Vorteil vorgesehen, dass die Abstützfläche vom Innenumfang einer Hülsenöffnung gebildet ist, deren Mittelachse von der Drehachse beabstandet ist und vorzugsweise parallel zu dieser verläuft. Anders ausgedrückt ist die die Abstützfläche bildende Hülsenöffnung exzentrisch zur Drehachse der Exzenterhülse angeordnet, so dass ein Verdrehen der Exzenterhülse relativ zur Platine um die Drehachse zu einem Verkippen der Platine um die zwischen dem ersten und dem zweiten Befestigungsmittel aufgespannte, gedachte Achse führt. Besonders bevorzugt ist eine Ausführungsform, bei der der, insbesondere bolzenförmige Karosserieabschnitt oder das karosseriefest anordenbare Element die Hülsenöffnung in axialer Richtung durchsetzend angeordnet ist.

Besonders bevorzugt ist eine Ausführungsform, bei der die Exzenterhülse einen, insbesondere als Tiefziehteil aus Metall ausgebildeten, Napf aufweist, der drehfest mit einem außenumfänglich rotationssymmetrischen Haltekörper verbunden ist, wobei der Haltekörper relativ zur Platine zusammen mit dem Napf um die den Napf durchsetzende Drehachse verdrehbar ist. Besonders bevorzugt handelt es sich bei dem Haltekörper um ein Kunststoffbauteil, insbesondere um ein Spritzgussteil aus Kunststoff. Ganz besonders bevorzugt ist eine Konstruktion, bei der der Haltekörper an seinem Außenumfang an einem Bauteil der Platine, insbesondere an einem Halteblech, gehalten ist. Bevorzugt greift hierzu das Halteblech in eine am Außenumfang des Haltekörpers eingebrachte Umfangsnut ein.

Besonders bevorzugt ist eine Ausführungsform, bei der die Abstützfläche zum Abstützen an dem karosseriefesten Bauteil vom Napf, genauer von der im Napf, insbesondere im Napfgrund, vorgesehenen Hülsenöffnung gebildet ist. Dabei hat die Hülsenöffnung bevorzugt einen geringeren Innendurchmesser als eine axial benachbart zur Hülsenöffnung vorgesehene Vertiefung des Napfes.

In Weiterbildung der Erfindung ist mit Vorteil vorgesehen, dass das karosseriefest anordenbare Element ein an der Fahrzeugkarosserie oder einem fahrzeugkarosseriefesten Bauteil, insbesondere lösbar festlegbares Bauteil ist, das gleichzeitig Bestandteil der dritten Befestigungsmittel zum Fixieren der Scheibenwischvorrichtung an der Fahrzeugkarosserie ist. Anders ausgedrückt hat das karosseriefest anordenbare Element bevorzugt eine Doppelfunktion und dient zum einen zur Aufnahme von Abstützkräften der Scheibenwischvorrichtung beim Verkippen der Platine um die gedachte Achse und zum anderen zum Fixieren der Scheibenwischvorrichtung an der Fahrzeugkarosserie.

Besonders bevorzugt ist dabei eine Ausführungsform, bei der das karosseriefest anordenbare Element ein Schraubenelement, vorzugsweise mit einem Außengewinde ist, wobei das Schraubenelement mit seinem Außengewinde in ein karosseriefestes, insbesondere von einer Mutter gebildetes, Innengewinde verschraubbar ist.

In Weiterbildung der Erfindung ist mit Vorteil vorgesehen, dass die Scheibenwischvorrichtung mit Hilfe des karosseriefest anordenbaren Elementes, das Bestandteil der dritten Befestigungsmittel ist, dadurch an der Fahrzeugkarosserie festlegbar ist, dass die Exzenterhülse axial zwischen einem Einspannabschnitt, insbesondere einem Schraubenkopf, des karosseriefest anordenbaren Elementes und einem karosseriefesten Bauteil, insbesondere einem Blech, einspannbar ist. Dabei ist eine Ausführungsform besonders bevorzugt, bei der die Exzenterbuchse nur so lange um die Drehachse verdrehbar ist, bis das karosseriefest anordenbare Element die Exzenterhülse fest verspannt.

Besonders bevorzugt ist eine Ausführungsform der Scheibenwischvorrichtung, bei der die Exzenterhülse derart ausgebildet ist, dass ein Verdrehen der Exzenterbuchse um 180° um die Drehachse zu einem Verkippen der Platine um einen Kippwinkel von zumindest näherungsweise 1° führt.

Bevorzugt ist eine Ausführungsform, bei der mindestens eine Markierung vorgesehen ist, die mindestens eine Verdrehstellung der Exzenterhülse um die Drehachse und damit eine Verkippstellung der Platine um die zwischen dem ersten und dem zweiten Befestigungsmittel aufgespannte Achse kennzeichnet. Dabei ist es besonders bevorzugt eine entsprechende Markierung sowohl an der Exzenterhülse als auch an einem Halteblech zum verdrehbaren Halten der Exzenterhülse anzubringen. Mit Vorteil kennzeichnet die zumindest eine Markierung eine Neutralstellung.

Die Erfindung führt auch auf ein Kraftfahrzeug mit einer davon festgelegten Scheibenwischvorrichtung nach einem der vorhergehenden Ansprüche. Bevorzugt handelt es sich bei der Scheibenwischvorrichtung um eine Frontscheibenwischvorrichtung, deren Verstellmittel eine Exzenterhülse aufweisen, die sich entweder unmittelbar an der Fahrzeugkarosserie oder an einem karosseriefesten Element abstützend angeordnet ist.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1a:: eine Scheibenwischvorrichtung in einer perspekti- vischen Darstellung,

- Fig. 1b:: ein vergrößertes Detail aus Fig. 1b, aus dem Ver- stellmittel zum Verkippen einer Platine der Scheibenwischvorrichtung gemäß Fig. 1a um eine Achse zu erkennen sind,
- Fig. 1c:: eine Schnittansicht der Verstellmittel entlang der Schnittlinie A-A gemäß Fig. 1a,
- Fig. 2a:: eine weitere perspektivische Darstellung einer Scheibenwischvorrichtung, bei der die Verstell- mittel im Vergleich zum Ausführungsbeispiel gemäß Fig. 1a verstellt sind und
- Fig. 2b:: eine vergrößerte Detailansicht, aus der die Ver- stellmittel gemäß Fig. 2a ersichtlich sind.

### Ausführungsformen der Erfindung

In den Figuren sind gleiche Bauteile und Bauteile mit der gleichen Funktion mit den gleichen Bezugszeichen gekennzeichnet.

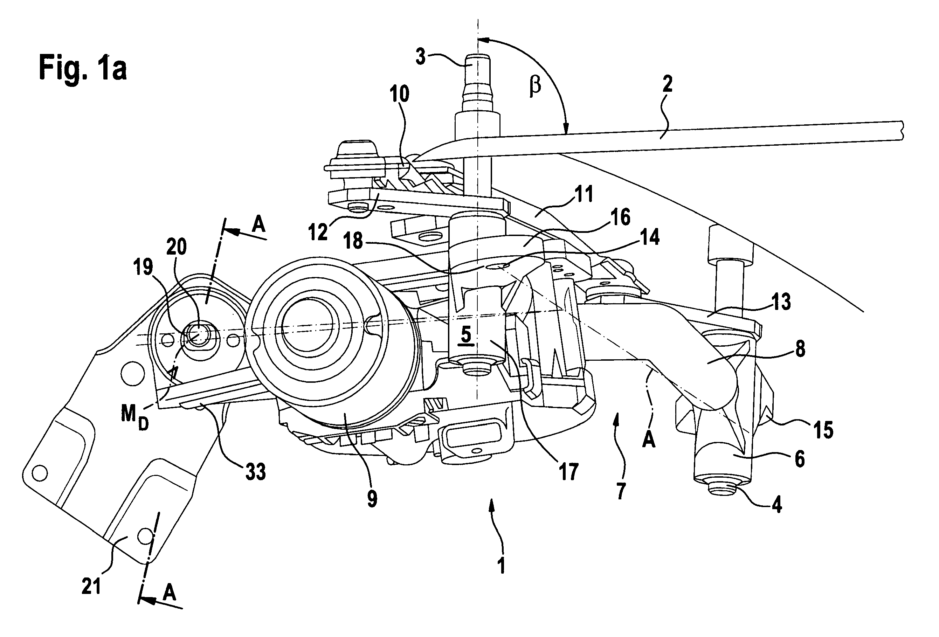

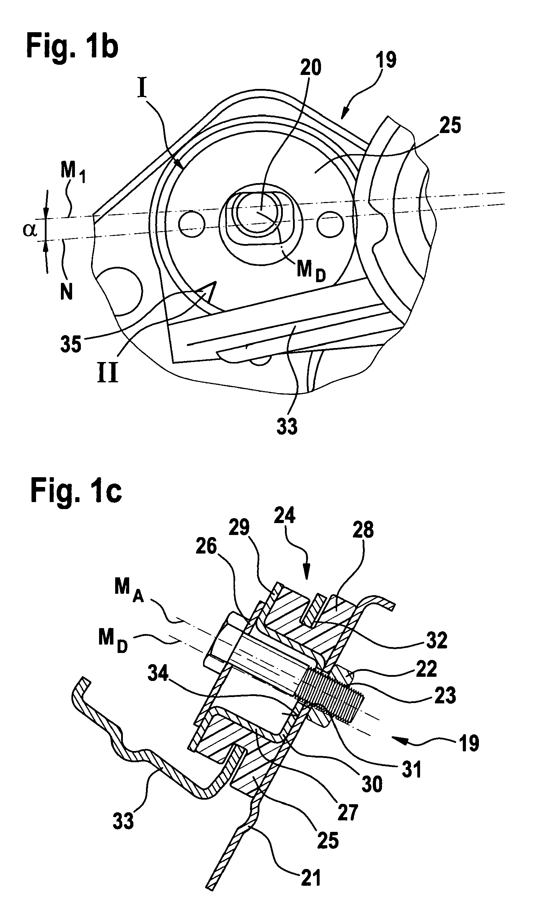

In Fig. 1 ist eine als Frontscheibenwischvorrichtung ausgebildete Scheibenwischvorrichtung 1 für ein Kraftfahrzeug gezeigt. Die Scheibenwischvorrichtung 1 ist vor einer Scheibe 2 angeordnet und an der Fahrzeugkarosserie, die hier aus Gründen der Übersichtlichkeit nicht gezeigt ist, befestigt. Die Scheibenwischvorrichtung 1 weist eine erste Wischerwelle 3 und eine zweite Wischerwelle 4 auf, die aus der Karosserie des Kraftfahrzeuges herausragen und mit einer durch die Scheibe 2 gebildeten Ebene einen Winkel β einschließen. Die Wischerwellen 3, 4 sind jeweils in einem ersten bzw. zweiten Wischerlager 5, 6 gelagert und durch eine Platine 7 (Haltemittel) miteinander verbunden, die ein Trägerrohr 8 umfasst. Am Trägerrohr 8 ist zwischen dem ersten Wischerlager 3 und dem zweiten Wischerlager 4 ein Wischermotor 9 als Antrieb befestigt, dessen Abtriebswelle über eine Mechanik aus Schubstangen 10, 11 und Kurbeln 12, 13 die Wischerwellen 3, 4 antreibt. Durch das Trägerrohr 8 ist also die Platine 7 gebildet, die die wesentlichen Komponenten, wie den Wischermotor 9 und die Wischerlager 5, 6 trägt.

Im Bereich des ersten Wischerlagers 5 und damit an einem Ende der Längserstreckung der Scheibenwischvorrichtung 1 ist das erste Befestigungsmittel 14 angeordnet und bildet damit einen ersten Befestigungspunkt an dem die Platine 7 an der Karosserie befestigt ist. Im Bereich des zweiten Wischerlagers 4 und damit am anderen Ende der Längserstreckung der Scheibenwischvorrichtung 1, bzw. der Platine 7, ist das zweite Befestigungsmittel 15 angeordnet und bildet damit einen zweiten Befestigungspunkt für die Platine 7. Das zweite Befestigungsmittel 15 ist im Wesentlichen gleich aufgebaut wie das erste Befestigungsmittel 14. Dieses umfasst einen Befestigungsabschnitt 16, der einstückig mit einem die erste Wischerwelle 3 lagernden, rohrförmigen Lagerabschnitt 17 des ersten Wischerlagers 5 ausgebildet ist.

Der Befestigungsabschnitt 16 ist von im Wesentlichen länglicher Gestalt und an einem Ende seiner Längserstreckung am Lagerabschnitt 17 festgelegt. Am anderen, freien Ende des Befestigungsabschnittes 16 ist ein Befestigungsauge 18 angeordnet (eingebracht). Mit Hilfe eines, insbesondere lösbaren, Befestigungselementes, beispielsweise eine Schraube oder einen Dreh- und/oder Steckverschluss, kann der Befestigungsabschnitt 16 und damit die der Scheibenwischvorrichtung 1 an der Karosserie des Fahrzeuges vorgesehen werden kann.

Ist die Platine 7 der Scheibenwischvorrichtung 1 mit Hilfe der ersten und zweiten Befestigungsmittel 14, 15 an der Karosserie des Kraftfahrzeuges befestigt, kann die Platine 7 noch immer um eine durch die beiden Befestigungsmittel 14, 15, genauer durch deren Befestigungsaugen 18 definierte Achse A relativ zur Scheibe 2 verkippt werden. Ein möglicher realisierbarer Verkippwinkel α, zwischen einer (mittleren) Neutralstellung N und einer maximal nach außen verkippten Stellung M₁ ist schematisch in der vergrößerten Ansicht gemäß Fig. 1b eingezeichnet.

Mit Abstand zu der durch die ersten und zweiten Befestigungsmittel 14, 15 verlaufende Achse A ist ein drittes Befestigungsmittel 19 zum Festlegen der Platine 7 an der Fahrzeugkarosserie gezeigt. Das dritte Befestigungsmittel 19 umfasst ein als Schraubelement ausgebildetes karosseriefest anordenbares Element 20, das im montierten Zustand karosseriefest ist. Mittels des Elementes 20 bzw. mit Hilfe des dritten Befestigungsmittels 19 ist die Scheibenwischvorrichtung 1 an einem Blech 21 festlegbar, das mit der eigentlichen Karosserie verschraubt ist. Zum Fixieren des Elements 20 ist an dem Blech 21 eine Mutter 22 festgelegt, wobei das Element 20 mit seinem Außengewinde 23 mit der Mutter 22, genauer mit deren Innengewinde, verschraubbar ist.

Um die Platine 7 um die Achse A um einen Kippwinkel α verschwenken zu können, sind Verstellmittel 24 vorgesehen. Diese umfassen eine Exzenterhülse 25 die von dem Element 20 durchsetzt ist. An dem von der Mutter 22 abgewandten Ende umfasst das an der Karosserie festlegbare Element 20 einen Einspannabschnitt 26, mit dessen Hilfe die Exzenterhülse 25 stirnseitig gegen das Blech 21 verspannbar ist. Wenn die Exzenterhülse 25 die Verstellmittel 24 gegen das Blech 21 verspannt, also die Scheibenwischvorrichtung 1 vollständig an der Karosserie festgelegt ist, ist kein Verkippen der Platine 7 um die Achse A mehr möglich, so dass die Kippbewegung, also die Ausrichtung der Wischerwellen 3, 4 relativ zur Scheibe 2, vollführt werden muss, bevor das Element 20 fest mit der Mutter 22 verschraubt wird.

Die Exzenterhülse 25 umfasst, wie sich aus Fig. 1c ergibt, einen inneren, als Tiefziehteil aus Metall ausgebildeten Napf 27, der drehfest mit einem Haltekörper 28 aus Kunststoff verbunden ist. Dabei übergreift ein Umfangsbund 29 des Napfes 27 den Haltekörper 28 in radialer Richtung und bildet somit eine metallische Anlagefläche für den Einspannabschnitt 26 des karosseriefesten Elementes 20. Im Napfgrund 30 des Napfes 27 ist eine kreisförmig konturierte Hülsenöffnung 31 eingebracht, deren Innendurchmesser kleiner ist als der Durchmesser des Napfgrundes 30.

Im rotationssymmetrischen Außenumfang des Haltekörpers 28 ist eine Umfangsnut 32 vorgesehen, in die ein Halteblech 33 der Scheibenwischvorrichtung 1 eingreift. Das Halteblech 33 stellt die Verbindung zwischen dem dritten Befestigungsmittel 19 sowie den Verstellmitteln 24 zum Trägerrohr 8 dar. Dabei ist die Exzenterhülse 25 derart an dem Halteblech 33 festgelegt, dass die Exzenterhülse 25 relativ zu dem Halteblech 33 und damit relativ zu dem Trägerrohr 8 (bei gelöstem Element 20) um eine zentrische Drehachse M_{D} verdrehbar ist. Aus Fig. 1c wird deutlich, dass die Drehachse M_{D} der Exzenterhülse 25 parallel zu einer Mittelachse M_{A} der Hülsenöffnung 31 verläuft und mit Abstand zu dieser angeordnet ist. Da sich die Exzenterhülse 25 mit einer vom Innenumfang der Hülsenöffnung 31 gebildeten, kreisringförmigen Abstützfläche 34 in radialer Richtung an dem die Hülsenöffnung 31 durchsetzenden Element 20 abstützt, führt die exzentrische Anordnung der Mittelachse M_{A} der Hülsenöffnung zur Drehachse M_{D} der Exzenterhülse 25 dazu, dass wenn die Exzenterhülse 25 um die Drehachse M_{D} verschwenkt wird, der Abstand der Drehachse M_{D} zum karosseriefesten Element 20 und damit der Abstand des Halteblechs 33 der Platine 7 zur Fahrzeugkarosserie verändert wird, woraus eine Verschwenkbewegung der Platine 7 um die Achse A relativ zur Scheibe 2 und zur Fahrzeugkarosserie resultiert.

Um ein Verschwenken der Platine 7 um die Achse A von der in Fig. 1b eingezeichneten Neutralstellung N in eine maximale äußere Auslenkung M₁ zu realisieren, muss die Exzenterhülse 25 um 90° verdreht werden, also aus einer ersten Position I in eine zweite Position II. Dabei ist die momentane Drehposition über eine Markierung 35 gekennzeichnet.

Nach dem Einstellen des gewünschten Kippwinkels α wird das karosseriefeste Element 20 fest mit der Mutter 22 verschraubt.

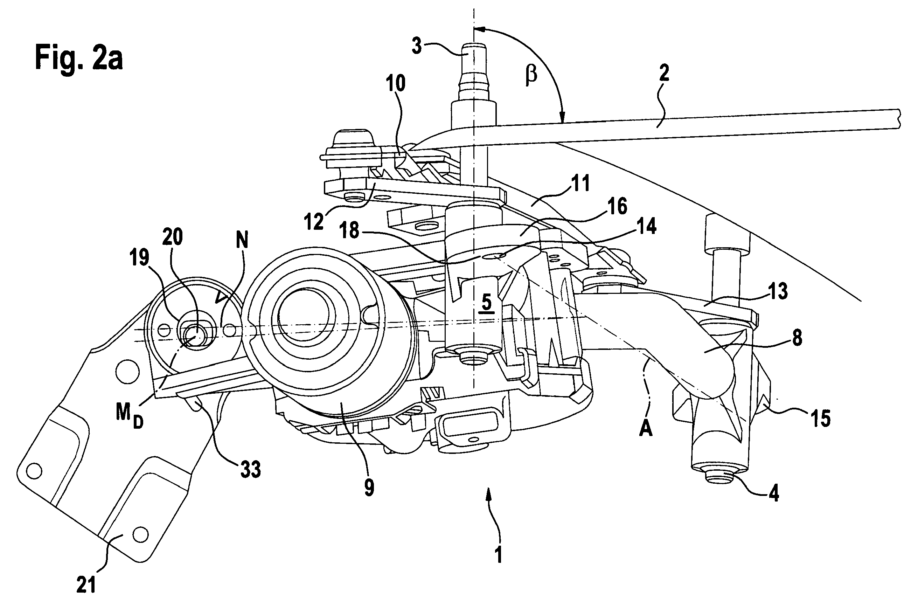

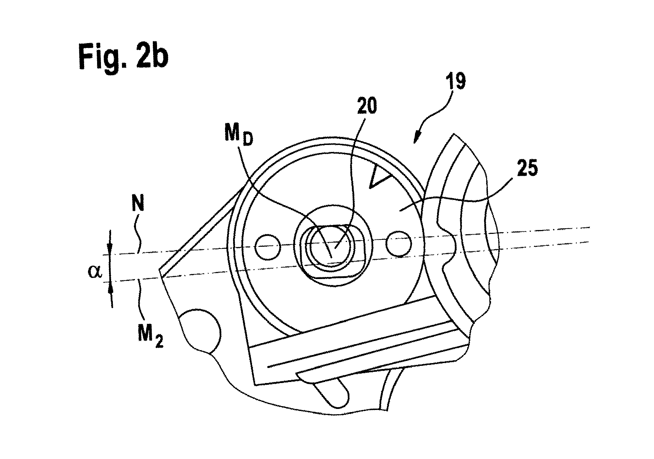

In Fig. 2a ist die in Fig. 1a gezeigte Scheibenwischvorrichtung 1 dargestellt. Der einzige Unterschied zu Fig. 1 besteht darin, dass, wie sich insbesondere aus Fig. 2b ergibt, die Platine 7 aus einer Neutralstellung N um die Achse A um einen Kippwinkel α in eine zweite äußere Extremposition M₂ verschoben ist. Hierzu wurde die Exzenterhülse 25 um 90° ausgehend von einer Neutralstellung um ihre Drehachse M_{D} verdreht. Der maximale, durch ein Verdrehen der Exzenterhülse 25 um 180° realisierbare Kippwinkel beträgt demnach 2 α.

## Patentansprüche

1. Scheibenwischvorrichtung, insbesondere Frontscheibenwischvorrichtung, für ein Kraftfahrzeug, mit einer Platine (7), einem ersten Befestigungsmittel (14), einem zweiten Befestigungsmittel (15) und einem dritten Befestigungsmittel (19) zum Befestigen der Platine (7) am Kraftfahrzeug, wobei das dritte Befestigungsmittel (19) außerhalb einer Achse (A) zwischen dem ersten und dem zweiten Befestigungsmittel (14, 15) angeordnet ist und Verstellmittel (24) zum Verkippen der Platine (7) um einen Kippwinkel (α) um die Achse (A) aufweist,
**dadurch gekennzeichnet,**
**dass** die Verstellmittel (24) eine, um eine Drehachse (M_{D}) relativ zur Platine (7) verdrehbare, Exzenterhülse (25) zum Abstützen der Platine (7) an der Fahrzeugkarosserie oder einem karosseriefest anordenbaren Element (20) umfassen.

2. Scheibenwischvorrichtung nach Anspruch 1,
**dadurch gekennzeichnet,**
**dass** die Exzenterhülse (25) eine gekrümmte Abstützfläche (34) zur Anlage an der Fahrzugkarosserie bzw. dem Element (20) aufweist.

3. Scheibenwischvorrichtung nach Anspruch 2,
**dadurch gekennzeichnet,**
**dass** die Abstützfläche (34) vom, insbesondere im Querschnitt kreisförmig konturierten, Innenumfang einer Hülsenöffnung (31) gebildet ist, deren Mittelachse (M_{A}) von der Drehachse (M_{D}) der Exzenterhülse (25) beabstandet ist.

4. Scheibenwischvorrichtung nach einem der vorhergehenden Ansprüchen,
**dadurch gekennzeichnet,**
**dass** die Exzenterhülse (25) einen, insbesondere als Tiefziehteil aus Metall, ausgebildeten Napf (27) aufweist, der drehfest mit einem am Außenumfang rotationssymmetrischen relativ zur Platine (7) um die Drehachse (M_{D}) verdrehbaren Haltekörper (28), insbesondere aus Kunststoff, aufgenommen ist.

5. Scheibenwischvorrichtung nach Anspruch 4,
**dadurch gekennzeichnet,**
**dass** die Abstützfläche (34) von dem Napf (27) gebildet ist.

6. Scheibenwischvorrichtung nach einem der vorhergehenden Ansprüchen,
**dadurch gekennzeichnet,**
**dass** das karosseriefest anordenbare Element (20) Bestandteil der dritten Befestigungsmittel (19) ist und zum Fixieren der Verstellmittel (24) ausgebildet ist.

7. Scheibenwischvorrichtung nach Anspruch 6,
**dadurch gekennzeichnet,**
**dass** das karosseriefest anordenbare Element (20) ein Schraubelement ist.

8. Scheibenwischvorrichtung nach einem der Ansprüche 6 oder 7,
**dadurch gekennzeichnet,**
**dass** die Exzenterhülse (25) axial zwischen einem Einspannabschnitt (26), insbesondere einem Schraubenkopf, des karosseriefest anordenbaren Elementes (20) und einem karosseriefesten Bauteil, insbesondere einem Blech (21), einspannbar ist.

9. Scheibenwischvorrichtung nach einem der vorhergehenden Ansprüchen,
**dadurch gekennzeichnet,**
**dass** die Exzenterhülse (25) derart ausgebildet ist, dass ein Verdrehen um 180° um die Drehachse (M_{D}) zu einem Verkippen um einen Kippwinkel (α) von zumindest näherungsweise 1° führt.

10. Scheibenwischvorrichtung nach einem der vorhergehenden Ansprüchen,
**dadurch gekennzeichnet,**
**dass**, insbesondere an der Exzenterhülse (25) und/oder einem Halteblech (33), mindestens eine Verkippstellung, insbesondere eine Neutralstellung (N), kennzeichnende Markierung (35) vorgesehen ist.

11. Kraftfahrzeug mit einer Scheibenwischvorrichtung (1) nach einem der vorhergehenden Ansprüche.

## Claims

1. Pane-wiping device, in particular windscreen-wiping device, for a motor vehicle, having a plate (7), a first fastening means (14), a second fastening means (15) and a third fastening means (19) for fastening the plate (7) to the motor vehicle, the third fastening means (19) being arranged outside an axis (A) between the first and the second fastening means (14, 15) and having adjusting means (24) for tilting the plate (7) about the axis (A) by a tilting angle (α), **characterized in that** the adjusting means (24) comprise an eccentric sleeve (25) which can be rotated relative to the plate (7) about a rotational axis (M_{D}) in order to support the plate (7) on the vehicle body or an element (20) which can be arranged in a manner which is fixed with respect to the body.

2. Pane-wiping device according to Claim 1, **characterized in that** the eccentric sleeve (25) has a curved supporting face (34) for contact with the vehicle body or the element (20).

3. Pane-wiping device according to Claim 2, **characterized in that** the supporting face (34) is formed by the inner circumference of a sleeve opening (31), the cross section of which inner circumference is, in particular, contoured circularly and the centre axis (M_{A}) of which inner circumference is spaced apart from the rotational axis (M_{D}) of the eccentric sleeve (25).

4. Pane-wiping device according to one of the preceding claims, **characterized in that** the eccentric sleeve (25) has a cup (27) which is configured, in particular, as a deep-drawn part made from metal and is received in a rotationally fixed manner by way of a holding body (28), in particular made from plastic, which is rotationally symmetrical on the outer circumference and can be rotated about the rotational axis (M_{D}) relative to the plate (7).

5. Pane-wiping device according to Claim 4, **characterized in that** the supporting face (34) is formed by the cup (27).

6. Pane-wiping device according to one of the preceding claims, **characterized in that** the element (20) which can be arranged in a manner which is fixed with respect to the body is a constituent part of the third fastening means (19) and is configured for fixing the adjusting means (24).

7. Pane-wiping device according to Claim 6, **characterized in that** the element (20) which can be arranged in a manner which is fixed with respect to the body is a screw element.

8. Pane-wiping device according to either of Claims 6 and 7, **characterized in that** the eccentric sleeve (25) can be clamped in axially between a clamping section (26), in particular a screw head, of the element (20) which can be arranged in a manner which is fixed with respect to the body and a component, in particular a metal sheet (21), which is fixed with respect to the body.

9. Pane-wiping device according to one of the preceding claims, **characterized in that** the eccentric sleeve (25) is configured in such a way that a rotation by 180° about the rotational axis (M_{D}) leads to tilting by a tilting angle (α) of at least approximately 1°.

10. Pane-wiping device according to one of the preceding claims, **characterized in that** a marking (35) which labels at least one tilting position, in particular a neutral position (N), is provided, in particular on the eccentric sleeve (25) and/or a holding plate (33).

11. Motor vehicle having a pane-wiping device (1) according to one of the preceding claims.

## Revendications

1. Dispositif d'essuie-glace, en particulier dispositif d'essuie-glace pour pare-brise avant, pour un véhicule automobile, comprenant une platine (7), un premier moyen de fixation (14), un deuxième moyen de fixation (15) et un troisième moyen de fixation (19) pour la fixation de la platine (7) au véhicule automobile, le troisième moyen de fixation (19) étant disposé en dehors d'un axe (A) entre le premier et le deuxième moyen de fixation (14, 15) et présentant des moyens de réglage (24) pour faire basculer la platine (7) suivant un angle de basculement (α) autour de l'axe (A),
**caractérisé en ce que**
les moyens de réglage (24) comprennent une douille excentrée (25) pouvant tourner autour d'un axe de rotation (M_{D}) par rapport à la platine (7), pour le support de la platine (7) sur la carrosserie du véhicule, ou sur un élément (20) pouvant être disposé fixement sur la carrosserie.

2. Dispositif d'essuie-glace selon la revendication 1,
**caractérisé en ce que**
la douille excentrée (25) présente une surface d'appui courbe (34) pour l'appui contre la carrosserie du véhicule ou contre l'élément (20).

3. Dispositif d'essuie-glace selon la revendication 2,
**caractérisé en ce que**
la surface d'appui (34) est formée par la périphérie intérieure, ayant notamment un contour circulaire en section transversale, d'une ouverture de douille (31) dont l'axe médian (M_{A}) est espacé de l'axe de rotation (M_{D}) de la douille excentrée (25).

4. Dispositif d'essuie-glace selon l'une quelconque des revendications précédentes,
**caractérisé en ce que**
la douille excentrée (25) présente une coupelle (27) réalisée notamment sous forme de pièce emboutie en métal, qui est reçue de manière solidaire en rotation avec un corps de retenue (28), notamment en plastique, pouvant tourner sur la périphérie extérieure avec une symétrie de révolution par rapport à la platine (7) autour de l'axe de rotation (M_{D}).

5. Dispositif d'essuie-glace selon la revendication 4,
**caractérisé en ce que**
la surface d'appui (34) est formée par la coupelle (27).

6. Dispositif d'essuie-glace selon l'une quelconque des revendications précédentes,
**caractérisé en ce que**
l'élément (20) pouvant être disposé fixement sur la carrosserie fait partie du troisième moyen de fixation (19) et est réalisé pour fixer le moyen de réglage (24).

7. Dispositif d'essuie-glace selon la revendication 6,
**caractérisé en ce que**
l'élément (20) pouvant être disposé fixement sur la carrosserie est un élément vissable.

8. Dispositif d'essuie-glace selon l'une quelconque des revendications 6 ou 7,
**caractérisé en ce que**
la douille excentrée (25) peut être serrée axialement entre une portion de serrage (26), notamment une tête de vis, de l'élément (20) pouvant être disposé fixement sur la carrosserie, et un composant fixé à la carrosserie, notamment une tôle (21).

9. Dispositif d'essuie-glace selon l'une quelconque des revendications précédentes,
**caractérisé en ce que**
la douille excentrée (25) est réalisée de telle sorte qu'une rotation de 180° autour de l'axe de rotation (M_{D}) conduise à un basculement suivant un angle de basculement (α) d'au moins approximativement 1°.

10. Dispositif d'essuie-glace selon l'une quelconque des revendications précédentes,
**caractérisé en ce**
**qu'**un marquage (35) caractérisant au moins une position de basculement, notamment une position neutre (N), est prévu notamment sur la douille excentrée (25) et/ou sur une tôle de retenue (33).

11. Véhicule automobile comprenant un dispositif d'essuie-glace (1) selon l'une quelconque des revendications précédentes.
